# EUROPÄISCHE PATENTSCHRIFT

(11) **EP 2 580 074 B1**
(45) Veröffentlichungstag und Bekanntmachung des Hinweises auf die Patenterteilung: **19.03.2014**
(21) Anmeldenummer: 11720395.0
(22) Anmeldetag: 18.05.2011
(51) Int. Cl.: B60G 11/16, B60G 13/00, B60G 15/06, B60G 17/02

(54) **RADAUFHÄNGUNG FÜR GELENKTE RÄDER VON FAHRZEUGEN, INSBESONDERE VON KRAFTFAHRZEUGEN**
SUSPENSION FOR STEERED WHEELS OF VEHICLES, IN PARTICULAR OF MOTOR VEHICLES
SUSPENSION POUR ROUES ARTICULÉES DE VÉHICULES, EN PARTICULIER DE VÉHICULES AUTOMOBILES

(30) Priorität: 11.06.2010 DE 102010023539
(43) Veröffentlichungstag der Anmeldung: 17.04.2013
(73) Patentinhaber: Audi AG, 85045 Ingolstadt (DE)
(72) Erfinder: MICHEL, Wilfried, 93339 Riedenburg (DE)
(86) Internationale Anmeldenummer: PCT/EP2011/002458
(87) Internationale Veröffentlichungsnummer: WO 2011/154085

(56) Entgegenhaltungen:
- EP-A1- 2 135 756
- EP-A2- 1 479 542
- EP-A2- 1 970 227
- FR-A1- 2 840 257
- JP-A- 2001 088 527
- US-A- 2 190 298
- US-A- 4 065 152
- US-A- 6 056 305

## Beschreibung

Die Erfindung betrifft eine Radaufhängung für gelenkte Räder von Fahrzeugen, insbesondere von Kraftfahrzeugen gemäß dem Oberbegriff des Patentanspruches 1.

Eine derartige Radaufhängung beschreibt die DE 10 2005 001 744 B3, bei der eine am Federbein mit integriertem Teleskop-Stoßdämpfer oberhalb der Tragfeder konzentrisch angeordnete Speicherfeder vorgesehen ist, die der Federkraft der Tragfeder entgegenwirkt und somit die Verstellkräfte vermindert, die ein um den Stoßdämpfer und innerhalb der Federn angeordneter, elektromechanischer Aktuator mit einem Kugelgewindetrieb aufbringen muss, um über den axial verstellbaren Federteller des Federbeines eine Niveauverstellung und/oder einen Nick- und Wankausgleich am Kraftfahrzeug zu bewirken. Problematisch ist bei derartigen Radaufhängungen mit gelenkten Rädern (Vorderachsen) zum einen die räumliche Anordnung des Federbeines unter Berücksichtigung des erforderlichen Freiraumes der gelenkten Räder innerhalb der umgebenden Karosserie (Radhaus, etc.). Des Weiteren hat ein derartiger Aufbau den Nachteil, dass diese Lösung in alle Richtungen radial sehr platzintensiv baut. Maßbestimmend ist zunächst einmal der Dämpfer, der aufgrund seiner zu erbringenden Dämpfungsarbeit einen gewissen Durchmesser aufweisen muss. Radial nach außen folgt dann die Hohlspindel, die mit einer geeigneten Luft zum Dämpferrohr beabstandet ist. Diese Hohlspindel wird weiter in einem geeigneten Abstand von einer Schraubendruckfeder umgeben. Zusätzlich ist zum Schutz des empfindlichen Kugelgewindetriebes als äußere Hülle noch ein Faltenbalg vorzusehen, welcher der Ein- und Ausfederung und den Stellbewegungen des Verstellfedertellers folgen muss. Es sind demnach eine Reihe von Bauteilen für die radiale Maßkette jeweils zueinander mit Luft beabstandet und somit letztendlich für einen großen Durchmesser des so aufgebauten Federbeines verantwortlich. Ein derartiger Bauraum steht insbesondere in Fahrzeugquerrichtung nur in begrenztem Maße zur Verfügung, so dass ein derartiger Aufbau für viele Anwendungen unpraktikabel ist.

Aus der US 6 056 305 A, der als nächstliegender Stand der Technik angesehen wird, ist eine gattungsgemäße Radaufhängung bekannt, bei der ein Stoßdämpfer und eine Höhenverstelleinrichtung jeweils als separate Bauteile in der Fahrtrichtung gesehen hintereinander angeordnet sind. Aus der US 4 065 152 A ist eine weitere Radaufhängung bekannt, bei der ein Teleskop-Stoßdämpfer außerhalb einer als Schraubendruckfeder ausgeführten Tragfeder positioniert ist. Aus der JP 2001 088 527 A und aus der FR 2 840 257 A1 sind jeweils Radaufhängungen mit einer Höhenverstelleinrichtung bekannt, die einen Gewindetrieb aufweist.

Aufgabe der Erfindung ist es deshalb, eine Radaufhängung der gattungsgemäßen Art vorzuschlagen, die eine fertigungstechnisch günstige, bauraumoptimierte Konstruktion aufweist und trotzdem den für Lenkbewegungen des Rades erforderlichen Freiraum sicherstellt.

Diese Aufgabe wird erfindungsgemäß mit den Merkmalen des Patentanspruches 1 gelöst. Vorteilhafte Weiterbildungen der Erfindung sind in den Unteransprüchen angeführt.

Gemäß Anspruch 1 ist eine Radaufhängung für gelenkte Räder von Fahrzeugen, insbesondere von Kraftfahrzeugen, vorgesehen, mit einem aktiven Federungs- und Dämpfungssystem, das einen Schwingungs- bzw. Stoßdämpfer sowie eine mittels einer Verstelleinrichtung, insbesondere mittels einer elektrischen Verstelleinrichtung, verstellbare Federelementanordnung aufweist. Erfindungsgemäß ist die mittels der Verstelleinrichtung verstellbare Federelementanordnung durch ein separates Bauteil gebildet, das in Fahrtrichtung des Fahrzeuges gesehen vor oder hinter dem vorzugsweise durch einen Zweirohrdämpfer gebildeten Stoßdämpfer angeordnet ist.

Mit einer erfindungsgemäßen Separierung des Schwingungs- bzw. Stoßdämpfers einerseits und der verstellbaren Federelementanordnung andererseits, bei der die beiden Bauteile in Fahrtrichtung gesehen hintereinander angeordnet sind, wird ein relativ großbauender Aufbau des Federbeins in Fahrzeugquerrichtung vermieden, was erhebliche konstruktive Freiheiten bringt, um zum Beispiel insbesondere die Aktuatorik für ein Aktivfahrwerk in optimaler Weise verwirklichen zu können. Des Weiteren ist es mit einem derartigen erfindungsgemäßen Aufbau möglich, die Federelementanordnung insgesamt schlanker auszubilden, da die Federelementanordnung nunmehr unabhängig von den Abmessungen des Schwingungs- bzw. Stoßdämpfer ausgelegt werden kann.

Das heißt, dass die Federelementanordnung und/oder die Schwingungs- bzw. Stoßdämpfer bei einem derartigen erfindungsgemäßen Aufbau somit ohne Kompromisse dimensioniert und ausgelegt werden können, so dass sich dadurch völlig neue konstruktive Freiheitsgrade ergeben. Beispielsweise ist in diesem Zusammenhang nunmehr auch ein regelbarer bzw. schaltbarer Stoßdämpfer verwirklichbar, der zum Beispiel außenliegende bzw. seitlich liegende Magnetventile zur Steuerung variabler Dämpfungseigenschaften (zum Beispiel weich, hart, etc.) ermöglicht.

Durch die erfindungsgemäße Anordnung lässt sich vorteilhaft auch der Stoßdämpfer als Zweirohrdämpfer ausbilden, wodurch die Schwingungen besser gedämpft und damit sowohl Sicherheit als auch Fahrkomfort erhöht werden können.

Des Weiteren ergibt sich durch die erfindungsgemäße Anordnung eine verbesserte Kühlung des Stoßdämpfers, da dieser nunmehr freiliegend im Fahrtwind angeordnet ist und nicht mehr von umgebenden Bauteilen abgeschirmt ist.

Ein weiterer wesentlicher Vorteil der erfindungsgemäßen Anordnung ist darin zu sehen, dass die Federelementanordnung sogar schlanker ausgebildet sein kann als ein konventionelles Federbein mit einem darin enthaltenen Dämpfer.

Von besonderem Vorteil ist es dabei, dass der Stoßdämpfer und die Federelementanordnung unmittelbar benachbart und hintereinanderliegend in einer durch die Fahrzeughochachsenrichtung und die Fahrzeuglängsachse aufgespannten Fahrzeugebene angeordnet sind. Insbesondere mit einer derartigen Anordnung wird ein lediglich geringer Bauraum in Fahrzeugquerrichtung beansprucht.

Es versteht sich des Weiteren, dass es gemäß einer bevorzugten Ausgestaltung vorteilhaft ist, dass der Stoßdämpfer in Fahrzeuglängsrichtung so neben der Federelementanordnung positioniert sein soll, dass der zum Lenken des Rades der Radaufhängung innerhalb vorgegebener bzw. definierter Lenkwinkel erforderliche Freiraum gegeben ist. Auch hierfür ergeben sich mit der erfindungsgemäßen Anordnung erhebliche zusätzliche konstruktive Freiheitsgrade.

Ferner können in verbesserter Auslegung und Abstimmung der Feder- und Dämpfungseigenschaften die Federelementanordnung und der Stoßdämpfer über separate Lager am Aufbau des Kraftfahrzeuges angelenkt sein, wobei diese Lager bzw. Dämpferlager zudem baulich und fertigungstechnisch vereinfacht herstellbar sind, zum Beispiel in Form von Elastomerlagern. Gerade die entkoppelte Ausgestaltung stellt auch einen wesentlichen Vorteil der erfindungsgemäßen Lösung dar, mit der eine erhebliche Komfortsteigerung verbunden ist, da der Dämpfer ungehindert oszillieren kann.

Gemäß einer erfindungsgemäßen Ausgestaltung ist vorgesehen, dass die Verstelleinrichtung der Federelementanordnung einen elektrisch angetriebenen Gewindetrieb, insbesondere einen Kugelgewindetrieb aufweist, der so im Bereich, insbesondere innerhalb, einer, vorzugsweise durch eine Schraubendruckfeder gebildeten, Tragfeder und einer, vorzugsweise durch eine Schraubendruckfeder gebildeten, Speicherfeder der am Aufbau und an einem unteren Lenker angelenkten Federelementanordnung positioniert ist, dass dessen Stellspindel auf einen zwischen der Tragfeder und der Speicherfeder vorgesehenen, eine Gewindemutter aufweisenden Verstellfederteller wirkt, um diesen axial zu verstellen. Ein derartiger Aufbau ermöglicht eine funktionssichere und zuverlässige Verstellung der Federelementanordnung in einer gesteuerten Art und Weise.

Dabei weist erfindungsgemäß die Stellspindel des Gewindetriebes einen geringeren Außendurchmesser auf als der Stoßdämpfer und ist die Stellspindel des Kugelgewindetriebs aus einem Vollmaterial hergestellt. Mit derartigen Maßnahmen lässt sich ein geringeres Rotationsmassenträgheitsmoment der Spindel realisieren, da extrem kleine Durchmesser möglich sind, und zwar insbesondere im Gegensatz zu einer Hohlspindel, wie sie zuvor in Verbindung mit dem Aufbau der DE 10 2005 001 744 B3 geschildert worden ist. Dies bedeutet somit bei der erfindungsgemäßen Ausgestaltung eine höhere Dynamik des Spindeltriebes mit weitaus kürzeren, vorteilhaften Antwort- und Reaktionszeiten.

Zusammenfassend gesehen, kann somit durch die Separierung des Stoßdämpfers und dessen Verlagerung vor oder hinter die Federelementanordnung die gesamte Konstruktion in der Querausdehnung schlanker blauen und ist dementsprechend kompromissloser zwischen dem Rad und den nach innen angrenzenden Karosserieteilen wie Radhaus, Längsträger, etc. unterzubringen.

Bevorzugt ist dabei der Stoßdämpfer in Fahrtrichtung hinter der Federelementanordnung und/oder im Wesentlichen parallel zu dieser angeordnet, so dass vor der Federelementanordnung Einbauraum zum Beispiel für die Lenkeinrichtung des Rades geschaffen ist.

Des Weiteren können die Federelementanordnung und der Stoßdämpfer über separate Aufnahmen an einem oder an mehreren Lenkern der Radaufhängung angelenkt sein und deshalb ebenfalls in ihren Führungseigenschaften und Federraten gezielt auf die jeweiligen Anforderungen abgestimmt sein.

Eine erfindungsgemäße Abstützung der Federelementanordnung an der Radaufhängung wird ferner geschaffen, indem die Tragfeder an einem Lenker der Radaufhängung über einen als Schwinge bzw. Pendel mit in im Wesentlichen Fahrzeuglängsrichtung ausgerichteter Schwenkachse ausgebildeten Federteller abgestützt ist. Damit wird beim Durchfedern des Rades eine Verzwängung der Tragfeder bzw. der Federelementanordnung durch Lenkerbewegungen vermieden.

Das becherförmig ausgeführte Pendel kann dabei in eine das Pendel aufnehmende Ausnehmung im Lenker der Radaufhängung eingesetzt sein und über nach oben abragende, diametral gegenüberliegende Lageraugen und Lagerbolzen schwenkbar mit korrespondierenden Lageraugen am Lenker verbunden sein. Das Pendel ist somit baulich und fertigungstechnisch günstig mit dem die Tragfeder aufnehmenden Federteller kombiniert. Ferner stellt sich durch diese Ausgestaltung der weiter oben liegenden Schwenkachse ein stabiles Gleichgewicht ein.

In vorteilhafter Weiterbildung der Erfindung kann der Radträger, neben einer Anordnung an einem einzigen Lenker, wie beispielsweise an einem Dreiecklenker, auch an unteren, aufgelösten Einzellenkern angelenkt sein, wobei an einem Lenker die Federelementanordnung und an dem anderen Lenker der Stoßdämpfer angelenkt ist. Dabei können die Federelementanordnung und der Stoßdämpfer jeweils getrennt voneinander möglichst weit außen an den Lenkern angebunden sein, um möglichst direkte Feder- und Dämpferübersetzungen herzustellen.

Eine einfache Anbindung des Stoßdämpfers am Einzellenker kann dadurch erreicht werden, dass der Stoßdämpfer mit einem gabelförmigen Anschlussteil den Einzellenker übergreifend über ein in Fahrzeuglängsrichtung ausgerichtetes Gummi-Metall-Schwenklager am Einzellenker angelenkt ist.

Schließlich kann um die Kolbenstange des Stoßdämpfers eine mit dem Dämpferrohr zusammenwirkende Zusatzfeder angeordnet sein.

Mehrere Ausführungsbeispiele der Erfindung sind im folgenden mit weiteren Einzelheiten näher erläutert. Die schematische Zeichnung zeigt in:
- Fig. 1: schematisch eine nur teilweise dargestellte Radaufhängung für gelenkte Räder von Kraftfahrzeugen, mit einem unteren Querlenker, einer Federelementanordnung mit einem integrierten, elektrischen Aktuator und mit einem benachbart dazu angeordneten Teleskop-Stoßdämpfer,
- Fig. 2: eine seitliche Schnittansicht gemäß Linie II - II der Fig. 1 durch die Radaufhängung,
- Fig. 3: eine Draufsicht auf die Radaufhängung nach den Fig. 1 und 2 in Richtung des Pfeils X der Fig. 1, und
- Fig. 4: die unteren Einzellenker einer zur Fig. 1 modifizierten Radaufhängung mit gabelförmiger Anbindung des Stoßdämpfers am Führungslenker.

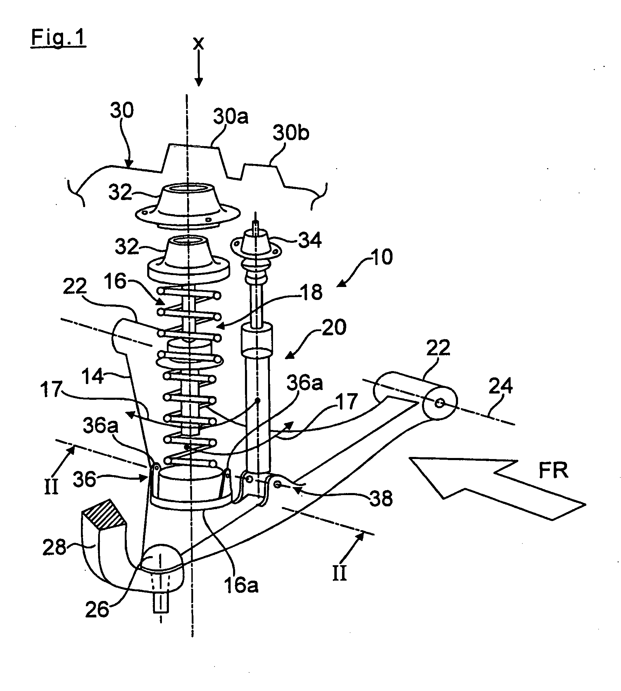

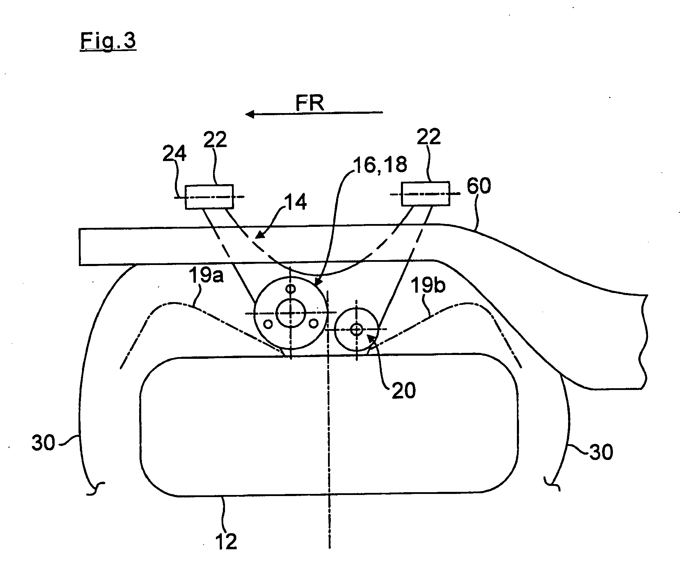

Die Fig. 1 zeigt nur teilweise eine Radaufhängung 10 für gelenkte Räder 12 (Fig. 3) für Kraftfahrzeuge, mit einem unteren Dreieckslenker bzw. Querlenker 14, einer Federelementanordnung 16 mit einem integrierten, elektrischen Aktuator 18 und einem in Fahrtrichtung FR hinten liegenden, als Zweirohrdämpfer ausgebildeten Teleskop-Stoßdämpfer 20.

Der Querlenker 14 ist über zwei Schwenklager 22 um eine etwa in Fahrzeuglängsrichtung und horizontal ausgerichtete Schwenkachse 24 am nicht dargestellten Aufbau des Kraftfahrzeuges angelenkt.

Über ein äußeres, in die nicht dargestellte Felgenschüssel des Rades 12 einragendes Kugelgelenk 26 ist der Querlenker 14 mit einem nur teilweise dargestellten Radträger 28 verbunden, an dem das Rad 12 drehbar gelagert ist und der über nicht dargestellte, obere Lenker eine Geradführung des Rades 12 herstellt.

Ferner ist der Radträger 28 mit einer vorne oder hinten liegenden, nicht dargestellten Lenkeinrichtung über eine Spurstange verbunden, mittels der das Rad 12 mit dem Radträger 28 lenkbar ist (siehe gestrichelt angedeutet in Fig. 3).

Die noch zu beschreibende Federelementanordnung 16 und der Stoßdämpfer 20 sind an dem nur angedeuteten Radhaus 30 (Fig. 3) über separate, domartige Aufnahmen 30a, 30b über Lager 32, 34, vorzugsweise Gummi-Metall-Lager 32, 34, abgestützt.

Ferner sind an dem unteren Querlenker 14 Aufnahmen 36, 38 vorgesehen, über die die Federelementanordnung 16 und der Stoßdämpfer 20 am Querlenker 14 angelenkt sind.

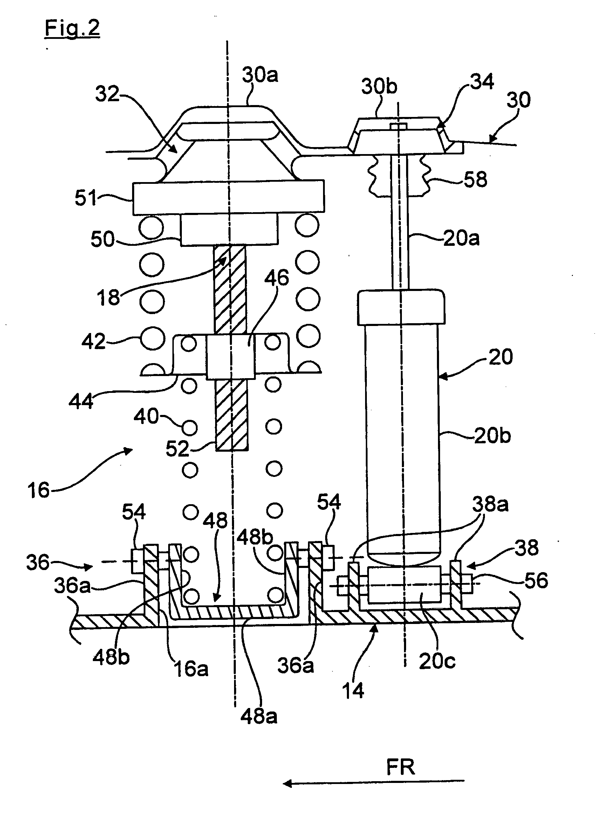

Die Fig. 2 zeigt mehr im Detail die Federelementanordnung 16 mit dem elektrischen Aktuator 18, die sich wie folgt zusammensetzen:
Die Federelementanordnung 16 weist eine untere, als Schraubendruckfeder ausgeführte Tragfeder 40 und eine ebenfalls als Schraubendruckfeder ausgeführte Speicherfeder 42 auf, die konzentrisch übereinander und hier teils ineinander angeordnet sind.

Beide Federn 40, 42 wirken über einen Verstellfederteller 44 zusammen, der mit einer Kugelgewindemutter 46 mit integrierten Kugeln (nicht ersichtlich) kombiniert ist.

Die Speicherfeder 42 stützt sich nach oben direkt an dem nicht näher dargestellten Dämpferlager 32 über einen als Tragplatte 51 ausgeführten Federteller ab, während die Tragfeder 40 nach unten über einen Federteller 48a am Querlenker 14 abgestützt ist.

Die Kugelgewindemutter 46 ist Teil eines Kugelgewindetriebes des elektrischen Aktuators 18 mit einer über einen Elektromotor 50 angetriebenen, aus Vollmaterial relativ geringen Durchmessers bestehenden Stellspindel 52. Die innerhalb der Tragplatte 51 drehbar wälzgelagerte Stellspindel 52 wird von dem an der Tragplatte 51 angeordneten Elektromotor 50 angetrieben.

Durch entsprechende Ansteuerung des über das Elastomerlager 32 am Aufbau 30 abgestützten Elektromotors 50 in der einen oder anderen Drehrichtung wird über die Stellspindel 52 die Kugelgewindemutter 46 mit dem Verstellfederteller 44 axial verfahren, wodurch die Tragfeder 40 in an sich bekannter Weise mehr oder minder vorgespannt bzw. der Aufbau 30 angehoben oder abgesenkt wird.

Durch die in ihrer Vorspannung gegengerichtete Speicherfeder 42 werden dabei die von dem Elektromotor 50 aufzubringenden Stellkräfte wesentlich verringert.

Der Federteller 48a ist Teil eines becherförmig ausgeformten Pendels 48, das mit nach oben ragenden Schenkeln bzw. Lageraugen 48b über Lagerbolzen 54 an Schenkeln bzw. Lageraugen 36a der Aufnahme 36 des Querlenkers 16 schwenkbar gelagert ist, wobei die Schwenkachse des Pendels 48 annähernd parallel zur Fahrzeuglängsrichtung ausgerichtet ist. Das Pendel 48 ist, wie aus den Fig. 1 und 2 ersichtlich ist, in einer korrespondierenden Ausnehmung 16a des Querlenkers 14 positioniert.

Der Zweirohr-Stoßdämpfer 20 ist unmittelbar benachbart zur Federelementanordnung 16 und parallel zu dieser angeordnet, wobei dessen Kolbenstange 20a über das separate Dämpferlager 34 am Aufbau 30 angelenkt ist, während das Dämpferrohr 20b an der konsolenartigen Aufnahme 38 mit beidseitigen Schenkeln bzw. Lageraugen 38a über ein Lagerauge 20c, ein Gummi-Metall-Hülsenlager (nicht ersichtlich) und eine Befestigungsschraube 56 am Querlenker 14 angelenkt ist. Die Schwenkachse der Verbindung liegt wiederum etwa in Fahrzeuglängsrichtung.

Der Zweirohr-Stoßdämpfer 20 und die Federelementanordnung 16 können grundsätzlich auch in Fahrtrichtung FR vertauscht angeordnet sein, was in der Fig. 1 durch die Pfeile 17 schematisch angedeutet ist.

Um die Kolbenstange 20a herum ist optional eine Zusatzfeder 58 bzw. ein Anschlagpuffer vorgesehen, der bei einem definierten Einfederweg des Stoßdämpfers 20 an dem Dämpferrohr 20b anschlägt und zum Beispiel als Zusatzfeder bzw. Federwegbegrenzung wirkt.

Wie insbesondere der Fig. 3 entnehmbar ist, sind die Federelementanordnung 16 mit dem elektrischen Aktuator 18 und der Zweirohr-Stoßdämpfer 20 in dem Freiraum zwischen dem Rad 12 und dem Radhaus 30 und einem daran anschließenden Längsträger 60 des tragenden Aufbaus des Kraftfahrzeuges derart angeordnet, dass auch der Freiraum für die gestrichelt eingezeichneten Lenkausschläge 19a und 19b des Rades 12 gegeben ist. Der Stoßdämpfer 20 ist dabei unmittelbar der Federelementanordnung 16 benachbart nach hinten, entgegen der Fahrtrichtung FR versetzt.

Die Federelementanordnung 16 mit dem integrierten Aktuator 18 und der Stoßdämpfer 20 sind weitestgehend in Querrichtung nach außen positioniert und ragen in Nähe des Querlenkers 14 in die Felgenschüssel des Rades 12 hinein, wodurch nahezu direkte Wegübersetzungen zum Querlenker 14 verwirklichbar sind. Dies wird insbesondere dadurch ermöglicht, dass durch die separate Anordnung des Stoßdämpfers 20 der Außendurchmesser der Federelementanordnung 16 mit integriertem Aktuator 18 wesentlich vermindert ist.

Dies gilt im Detail sowohl für den Aktuator 18 mit der aus Vollmaterial hergestellten, entsprechend biegesteifen Stellspindel 52, der Kugelgewindemutter 46 mit dem Verstellfederteller 44 und dem Elektromotor 50, als auch für die Tragfeder 40 und die Speicherfeder 42 der Federelementanordnung 16, die nicht um den Stoßdämpfer 20 herum angeordnet sind.

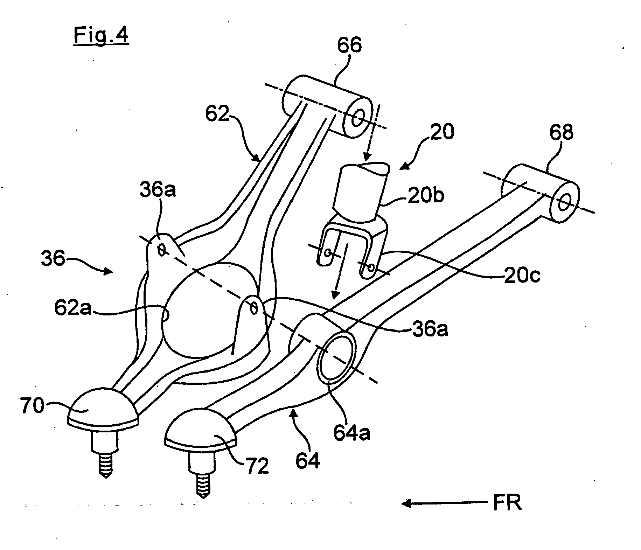

Die Fig. 4 schließlich zeigt bei einer modifizierten Radaufhängung die unteren, aufgelösten Einzellenker 62, 64, die über Gummi-Metall-Hülsenlager 66, 68 am nicht dargestellten Aufbau des Kraftfahrzeuges angelenkt sind und über Kugelgelenke 70, 72 mit dem nicht dargestelltem Radträger 28 verbunden sind.

Der in Fahrtrichtung FR des Kraftfahrzeuges vorne liegende Einzellenker 62 ist als Traglenker ausgelegt, an dem die vorbeschriebene Federelementanordnung 16 über das Pendel 48 mit dem Federteller 48a abgestützt ist. Das Pendel 48 ist dabei übereinstimmend mit vorstehenden Ausführungen in einer korrespondierenden Ausnehmung 62a mit Lageraugen 36a der Aufnahme 36 des Traglenkers 62 gelagert.

Ferner ist der Stoßdämpfer 20 mit seinem Dämpferrohr 20b über ein gabelförmiges Anschlussteil 20c an dem ebenfalls als Traglenker ausgebildeten Einzellenker 64 gelenkig verbunden. Das Anschlussteil 20c übergreift dabei den Einzellenker 64 und ist über ein Gummi-Metall-Hülsenlager und mittels einer nicht dargestellten Befestigungsschraube in ein Lagerauge 64a des Einzellenkers eingesetzt. Die Schwenkachse der Gelenkverbindung verläuft wiederum etwa in Fahrzeuglängsrichtung.

### Bezugszeichenliste

- 10: Radaufhängung
- 12: Räder
- 14: Querlenker
- 16: Federelementanordnung
- 16a: Ausnehmung
- 17: Pfeile
- 18: Aktuator
- 19a, 19b: Lenkausschläge
- 20: Teleskop-Stoßdämpfer
- 20a: Kolbenstange
- 20b: Dämpferrohr
- 20c: Lageraugen
- 22: Schwenklager
- 24: Schwenkachse
- 26: Kugelgelenk
- 28: Radträger
- 30: Radhaus
- 30a, 30b: Aufnahmen
- 32: Lager
- 34: Lager
- 36: Aufnahme
- 36a: Lageraugen
- 38: Aufnahme
- 38a: Lageraugen
- 40: Tragfeder
- 42: Speicherfeder
- 44: Verstellfederteller
- 46: Kugelgewindemutter
- 48: Pendel
- 48a: Federteller
- 48b: Lageraugen
- 50: Elektromotor
- 51: Tragplatte
- 52: Stellspindel
- 54: Lagerbolzen
- 56: Befestigungsschraube
- 58: Zusatzfeder
- 60: Längsträger
- 62: Einzellenker
- 62a: Ausnehmung
- 64: Einzellenker
- 64a: Ausnehmung
- 66: Gummi-Metall-Hülsenlager
- 68: Gummi-Metall-Hülsenlager
- 70: Kugelgelenk
- 72: Kugelgelenk

## Patentansprüche

1. Radaufhängung für gelenkte Räder von Fahrzeugen, insbesondere von Kraftfahrzeugen, mit einem aktiven Federungs- und Dämpfungssystem, das einen Schwingungs- bzw. Stoßdämpfer (20) sowie eine mittels einer Verstelleinrichtung, insbesondere mittels einer elektrischen Verstelleinrichtung, verstellbare Federelementanordnung (16) aufweist, wobei die mittels der Verstelleinrichtung verstellbare Federelementanordnung (16) sowie der vorzugsweise durch einen Zweirohrdämpfer gebildete Stoßdämpfer (20) jeweils durch ein separates Bauteil gebildet und in Fahrtrichtung des Fahrzeuges gesehen hintereinander angeordnet sind, **dadurch gekennzeichnet, dass** die Verstelleinrichtung der Federelementanordnung (16) ein elektrisch angetriebener Gewindetrieb ist, der eine Stellspindel (52) aufweist, die mit einer Gewindemutter (46) eines axial verstellbaren Verstellfedertellers (44) zusammenwirkt, der zwischen einer am unteren Lenker (14; 62) abgestützten Tragfeder (40) und einer am Fahrzeugaufbau abgestützten Speicherfeder (42) angeordnet ist, und dass die Stellspindel (52) des Gewindetriebes (46; 52) einen geringeren Außendurchmesser aufweist als der Stoßdämpfer (20) und aus einem Vollmaterial hergestellt ist, dass die Tragfeder (40) an einem Lenker (14; 62) der Radaufhängung (10) über einen als Pendel (48) mit in Fahrzeuglängsrichtung ausgerichteter Schwenkachse ausgebildeten Federteller (48a) abgestützt ist, und dass das becherförmig ausgeführte Pendel (48) in eine das Pendel (48) aufnehmende Ausnehmung (16a; 62a) im Lenker (14;62) der Radaufhängung (10) eingesetzt ist und über nach oben abragende, diametral gegenüberliegende Lageraugen (48b) und Lagerbolzen (54) schwenkbar mit korrespondierenden Lageraugen (36a) am Lenker (14; 62) verbunden ist.

2. Radaufhängung nach Anspruch 1, **dadurch gekennzeichnet, dass** der Stoßdämpfer (20) und die Federelementanordnung (16) unmittelbar benachbart und hintereinanderliegend in einer durch die Fahrzeughochachsenrichtung und die Fahrzeuglängsachse aufgespannten Fahrzeugebene angeordnet sind.

3. Radaufhängung nach Anspruch 1 oder 2, **dadurch gekennzeichnet, dass** der Stoßdämpfer (20) in Fahrzeuglängsrichtung so neben der Federelementanordnung (16) positioniert ist, dass der zum Lenken des Rades (12) der Radaufhängung (10) innerhalb definierter Lenkwinkel erforderliche Freiraum gegeben ist.

4. Radaufhängung nach einem der vorhergehenden Ansprüche, **dadurch gekennzeichnet, dass** die Federelementariordnung (16) und der Stoßdämpfer (20) über separate Lager (32, 34), insbesondere Elastomerlager, am Aufbau (30) des Kraftfahrzeuges angelenkt sind.

5. Radaufhängung nach einem der Ansprüche 1 bis 4, **dadurch gekennzeichnet, dass** der Stoßdämpfer (20) im Wesentlichen parallel zur Federelementanordnung (16) verläuft.

6. Radaufhängung nach einem der vorhergehenden Ansprüche, **dadurch gekennzeichnet, dass** die Federelementanordnung (16) und der Stoßdämpfer (20) über separate Aufnahmen (36, 38; 36a, 64a) an einem oder mehreren Lenkern (14; 62, 64) der Radaufhängung (10) angelenkt sind.

7. Radaufhängung nach einem der vorhergehenden Ansprüche, **dadurch gekennzeichnet, dass** der Radträger (28) an zwei unteren, aufgelösten Einzellenkern (62, 64) angelenkt ist, wobei an einem Lenker (62) die Federelementanordnung (16) und an dem anderen Lenker (64) der Stoßdämpfer (20) angelenkt ist.

8. Radaufhängung nach Anspruch 7, **dadurch gekennzeichnet, dass** der Stoßdämpfer (20) mit einem gabelförmigen Anschlussteil (20c) den Einzellenker (64) übergreifend über ein in Fahrzeuglängsrichtung ausgerichtetes Gummi-Metall-Schwenklager am Einzellenker (64) angelenkt ist.

9. Radaufhängung nach einem der vorhergehenden Ansprüche, **dadurch gekennzeichnet, dass** um eine Kolbenstange (20a) des Stoßdämpfers (20) eine mit einem Dämpferrohr (20b) zusammenwirkende Zusatzfeder (58) angeordnet ist.

## Claims

1. Wheel suspension for steered wheels of vehicles, in particular of motor vehicles, comprising an active spring and absorber system having a vibration and shock absorber (20) and a spring element arrangement (16) which is adjustable by means of an adjustment device, more particularly by means of an electrical adjustment device, the spring element arrangement (16), which is adjustable by means of the adjustment device, and the shock absorber (20), which is preferably formed by a double-tube shock absorber, each being formed by a separate component and arranged one behind the other when viewed in the vehicle driving direction, **characterised in that** the adjustment device of the spring element arrangement (16) has an electrically driven screw drive having an adjusting spindle (52) which interacts with a threaded nut (46) of an axially adjustable adjustment spring washer (44), which is arranged between a bearing spring (40) supported on the lower suspension link (14; 62) and a pre-loaded spring (42) supported on the vehicle body, and **in that** the adjusting spindle (52) of the screw drive (46; 52) has a smaller outer diameter than the shock absorber (20) and is produced from a solid material, **in that** the bearing spring (40) is supported on a suspension link (14; 62) of the wheel suspension (10) by means of a spring cup (48a) formed as a pendulum (48) having a pivot axis oriented in the vehicle longitudinal direction, and **in that** the pendulum (48), configured in a cup-shape, is inserted into a recess (16a; 62a) in the suspension link (14; 62) of the wheel suspension (10), which recess receives the pendulum (48), and is pivotally connected to corresponding bearing eyelets (36a) on the suspension link (14; 62) by means of diametrically opposed bearing eyelets (48b) and bearing bolts (54), which project away in an upwards direction.

2. Wheel suspension according to claim 1, **characterised in that** the shock absorber (20) and the spring element arrangement (16) are arranged directly adjacently, one behind the other, in a vehicle plane fixed by the vehicle vertical axis direction and the vehicle longitudinal axis.

3. Wheel suspension according to either claim 1 or claim 2, **characterised in that** the shock absorber (20) is positioned next to the spring element arrangement (16) in the vehicle longitudinal direction such that the clearance required for steering the wheel (12) of the wheel suspension (10) within a defined steering angle is produced.

4. Wheel suspension according to any of the preceding claims, **characterised in that** the spring element arrangement (16) and the shock absorber (20) are articulated to the vehicle body (30) by means of separate bearings (32, 34), in particular elastomer bearings.

5. Wheel suspension according to any of claims 1 to 4, **characterised in that** the shock absorber (20) extends substantially parallel to the spring element arrangement (16).

6. Wheel suspension according to any of the preceding claims, **characterised in that** the spring element arrangement (16) and the shock absorber (20) are articulated to one or more suspension links (14; 62; 64) of the wheel suspension (10) by means of separate sockets (36, 38; 36a, 64a).

7. Wheel suspension according to any of the preceding claims, **characterised in that** the wheel carrier (28) is articulated to two lower, separated individual suspension links (62, 64), the spring element arrangement (16) being articulated to one suspension link (62) and the shock absorber (20) being articulated to the other suspension link (64)

8. Wheel suspension according to claim 7, **characterised in that** the shock absorber (20) having a fork-shaped connection part (20c) is articulated to the individual suspension link (64), in a manner overlapping said suspension link, by means of a rubber-metal pivot bearing oriented in the vehicle longitudinal direction.

9. Wheel suspension according to any of the preceding claims, **characterised in that** an additional spring (58), which interacts with one shockabsorber tube (20b), is arranged around a piston rod (20a) of the shock absorber (20).

## Revendications

1. Suspension pour roues articulées de véhicules, notamment de véhicules automobiles, comprenant un système actif de suspension élastique et d'amortissement, qui présente un amortisseur d'oscillations ou de chocs (20) ainsi qu'une structure d'éléments à ressort (16) réglable au moyen d'un dispositif de réglage, en particulier au moyen d'un dispositif de réglage électrique, dans laquelle la structure d'éléments à ressort (16) réglable au moyen du dispositif de réglage ainsi que l'amortisseur de chocs (20) constitué de préférence d'un amortisseur à deux tubes sont formés respectivement par un composant séparé et sont aménagés l'un derrière l'autre par rapport au sens de marche du véhicule, **caractérisée en ce que** le dispositif de réglage de la structure d'éléments à ressort (16) est une commande à vis à entraînement électrique, qui présente une broche de réglage (52), qui coopère avec un écrou taraudé (46) d'une coupelle de ressort de réglage (44) réglable axialement, qui est agencée entre un ressort porteur (40) portant sur le bras oscillant inférieur (14 ; 62) et un ressort accumulateur (42) portant sur la carrosserie du véhicule, et **en ce que** la broche de réglage (52) de la commande à vis (46 ; 52) présente un diamètre externe plus faible que celui de l'amortisseur de chocs (20) et est fabriquée en matériau plein, **en ce que** le ressort porteur (40) porte sur un bras oscillant (14 ; 62) de la suspension de roues (10) via une coupelle de ressort (48a) se présentant sous la forme d'un pendule (48) avec un axe de pivotement orienté dans la direction longitudinale du véhicule et **en ce que** le pendule (48) conformé en auget est inséré dans une cavité (16a ; 62a) recevant le pendule (48) dans le bras oscillant (14 ; 62) de la suspension de roues (10) et est relié, via des oeillets de montage (48b) diamétralement opposés et dressés vers le haut et des boulons de montage (54), à pivotement avec des oeillets de montage correspondants (36a) sur la bielle (14 ; 62 ) .

2. Suspension de roues selon la revendication 1, **caractérisée en ce que** l'amortisseur de chocs (20) et la structure d'éléments à ressort (16) sont agencés au voisinage direct et l'un derrière l'autre dans un plan du véhicule fixé par la direction de l'axe vertical du véhicule et l'axe longitudinal du véhicule.

3. Suspension de roues selon la revendication 1 ou la revendication 2, **caractérisée en ce que** l'amortisseur de chocs (20) est positionné dans la direction longitudinale du véhicule assez près de la structure d'éléments à ressort (16) pour que l'espace libre requis pour le pilotage de la roue (12) de la suspension (10) dans un angle de braquage défini.

4. Suspension de roues selon l'une quelconque des revendications précédentes, **caractérisée en ce que** la structure d'éléments à ressort (16) et l'amortisseur de chocs (20) sont articulés via des paliers séparés (32, 34), en particulier des paliers élastomères, sur la carrosserie (30) du véhicule automobile.

5. Suspension de roues selon l'une quelconque des revendications 1 à 4, **caractérisée en ce que** l'amortisseur de chocs (20) s'étend sensiblement parallèlement à la structure d'éléments à ressort (16).

6. Suspension de roues selon l'une quelconque des revendications précédentes, **caractérisée en ce que** la structure d'éléments à ressort (16) et l'amortisseur de chocs (20) sont articulés via des logements séparés (36, 38 ; 36a, 64a) sur un ou plusieurs bras de suspension (14 ; 62, 64) de la suspension de roues (10).

7. Suspension de roues selon l'une quelconque des revendications précédentes, **caractérisée en ce que** le support de roues (28) est articulé sur deux bras de suspension individuels inférieurs dégagés (62, 64), dans laquelle la structure d'éléments à ressort (16) est articulée sur un bras de suspension (62) et l'amortisseur de chocs (20) est articulé sur l'autre bras de suspension (64).

8. Suspension de roues selon la revendication 7, **caractérisée en ce que** l'amortisseur de chocs (20) est articulé sur le bras de suspension individuel (64) avec une partie de raccordement en forme de fourche (20c) chevauchant le bras de suspension individuel (64) via un palier de pivotement de caoutchouc-métal orienté dans la direction longitudinale du véhicule.

9. Suspension de roues selon l'une quelconque des revendications précédentes, **caractérisée en ce qu'**un ressort d'appoint (58) coopérant avec un tube amortisseur (20b) est aménagé autour d'une tige de piston (20a) de l'amortisseur de chocs (20).
